# FASCICULE DE BREVET EUROPEEN

(11) **EP 3 829 976 B1**
(45) Date de publication et mention de la délivrance du brevet: **01.10.2025**
(21) Numéro de dépôt: 19737125.5
(22) Date de dépôt: 11.07.2019
(51) Int. Cl.: B64D 11/06

(54) **MODULE DOUBLE PORTES POUR SIEGES D'AVION**
DOPPELTÜRMODUL FÜR FLUGZEUGSITZE
DOUBLE DOOR MODULE FOR AIRCRAFT SEATS

(30) Priorité: 27.07.2018 FR 1870873
(43) Date de publication de la demande: 09.06.2021
(73) Titulaire: Safran Seats, 78370 Plaisir (FR)
(72) Inventeur: JASNY, Franck, 18190 VENESMES (FR); GUERRA, Daniele, 18000 BOURGES (FR); LAVERGNE, Denys, 36260 SAINTE LIZAIGNE (FR); LOPEZ, Bruno, 18290 CHAROST (FR); VERNY, Christian, 36100 ISSOUDUN (FR)
(74) Mandataire: Marconnet, Sébastien
(86) Numéro de dépôt international: PCT/EP2019/068747
(87) Numéro de publication internationale: WO 2020/020658

(56) Documents cités:
- EP-A1- 3 225 548
- WO-A1-2015/155687
- WO-A1-2017/066559
- WO-A1-2018/093825
- FR-A1- 3 050 717
- US-A1- 2013 241 247

## Description

La présente invention porte sur un module double portes pour sièges d'avion.

Les sièges d'avion de type "Classe Affaires" offrent aux passagers différentes positions de confort, de la position "assise" jusqu'à une position "allongée" dans laquelle le siège définit un plan de couchage sensiblement horizontal pour le passager.

Des positions intermédiaires de confort sont aussi proposées, telles que la position "relax" dans laquelle le dossier est fortement incliné. Généralement, ces positions sont obtenues par l'inclinaison du dossier, pivotant autour d'un axe horizontal. Le passager peut alors rester sur le siège lors de transitions entre les différentes positions. Le lit est généralement constitué notamment du dossier, de l'assise, d'un repose-jambes et d'un repose-pieds, ces derniers pouvant être fixes ou liés à la cinématique du siège.

Le document WO2015/155687 décrit une unité de sièges comprenant deux sièges disposés en regard l'un de l'autre. Chaque siège peut être disposé de telle sorte qu'il soit sensiblement aligné latéralement avec l'autre siège. Une console centrale positionnée entre les sièges comporte une paroi de séparation transversale. En outre, la console centrale comporte deux zones de pieds ouvertes suivant deux directions opposées l'une par rapport à l'autre. Chaque zone de pieds est associée respectivement à un siège correspondant en regard duquel se situe l'ouverture de la zone de pieds.

Un tel agencement permet un accès direct à une allée de circulation pour tous les passagers. De ce fait, lorsqu'un passager ou un personnel de bord marche dans un couloir de circulation situé latéralement par rapport au siège, il est susceptible d'être en contact visuel direct avec un passager assis dans un siège. Une telle situation engendre une absence d'intimité, qui peut apporter un sentiment d'inconfort pour le passager assis.

Le document WO 2018/093825 A1 décrit un module double portes pour sièges d'avion.

L'invention vise à remédier efficacement à cet inconvénient en proposant un module double portes pour sièges d'avion, selon la revendication 1.

L'invention permet ainsi, grâce à l'utilisation des deux portes intégrées dans le module, de définir un espace intérieur clos autour de chaque siège de l'unité de sièges procurant un sentiment d'intimité au passager en lui évitant d'être à la vue directe des autres passagers et/ou personnels de bord marchant dans le couloir de circulation. En outre, l'invention permet la réalisation d'un module double portes compact ayant une grande fiabilité de fonctionnement et aisément manipulable. Le système de verrouillage permet de sécuriser l'utilisation du module en empêchant sa fermeture lors des phases d'arrêt, de décollage, et d'atterrissage de l'avion, ainsi que dans des phases d'urgence. Le système de verrouillage permet également de maintenir ouvertes les portes lors d'une évacuation: le passager ou équipage peut faire glisser la porte jusqu'à ce que le système de verrouillage vienne bloquer la porte, et ce, même en cas de rupture de l'alimentation des actionneurs.

Selon une réalisation, ledit module double portes comporte en outre un dispositif de contrôle de déplacement de la première porte et/ou de la deuxième porte d'une position à une autre.

Selon une réalisation, un carter contenant le système de commande est distinct d'un boîtier contenant la première porte et la deuxième porte.

Selon une réalisation, le carter du système de commande est disposé en partie basse du module double portes.

Selon une réalisation, le boîtier contenant la première porte et la deuxième porte présente une épaisseur comprise entre 5 et 10cm et valant environ 7.5cm.

Selon une réalisation, l'actionneur électromagnétique est du type normalement en position inactive pour permettre un verrouillage de la porte en position stockée lorsque l'actionneur électromagnétique n'est pas alimenté.

Selon une réalisation, un organe élastique de rappel de l'actionneur électromagnétique en position inactive.

Selon une réalisation, le dispositif de verrouillage et de déverrouillage comporte, pour chaque porte, un premier actionneur électromagnétique destiné à être commandé par un passager et un deuxième actionneur électromagnétique destiné à être commandé par un membre du personnel de bord.

Selon une réalisation, un premier logement de verrouillage et un deuxième logement de verrouillage associés respectivement au premier actionneur électromagnétique et au deuxième actionneur électromagnétique présentent des géométries différentes.

Selon une réalisation, ledit module double portes comporte un bouton d'actionnement d'un déplacement d'une porte correspondante.

Selon une réalisation, le dispositif de contrôle de déplacement comporte au moins un actionneur de déploiement et un dispositif de transmission de mouvement de l'actionneur de déploiement vers une porte correspondante.

Selon une réalisation, l'actionneur de déploiement est un vérin à gaz.

Selon une réalisation, le dispositif de transmission de mouvement est un dispositif à courroie et à poulie.

Selon une réalisation, le système de commande comporte des indicateurs visuels d'état du système.

Selon une réalisation, un carter du système de commande intègre un marchepied.

L'invention a également pour objet une unité de sièges caractérisée en ce qu'elle comporte un module double portes tel que précédemment défini.

Selon une réalisation l'unité de siège comporte deux sièges disposés en regard l'un de l'autre, chaque siège étant disposé de telle sorte qu'il soit sensiblement aligné latéralement avec l'autre siège, et une console centrale positionnée entre les sièges, ledit module double portes étant disposé suivant un côté de la console centrale.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1] est une vue en perspective d'une unité de sièges selon la présente invention;
[Fig. 2a et 2b] sont des vues en perspective d'un module double portes selon l'invention comportant des portes respectivement en position stockée et en position déployée;
[Fig. 3] est une vue en perspective d'un module double portes selon la présente invention;
[Fig. 4] est une vue de côté d'un module double portes selon la présente l'invention;
[Fig. 5] est une vue de face du module double portes selon l'invention sans le capot du système de commande;
[Fig. 6] est une vue de face du module double portes selon l'invention sans le capot du système de commande;
[Fig. 7] est une vue de dessous du module double portes selon l'invention montrant les logements de verrouillage des actionneurs électromagnétiques associés à une des portes dudit module.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

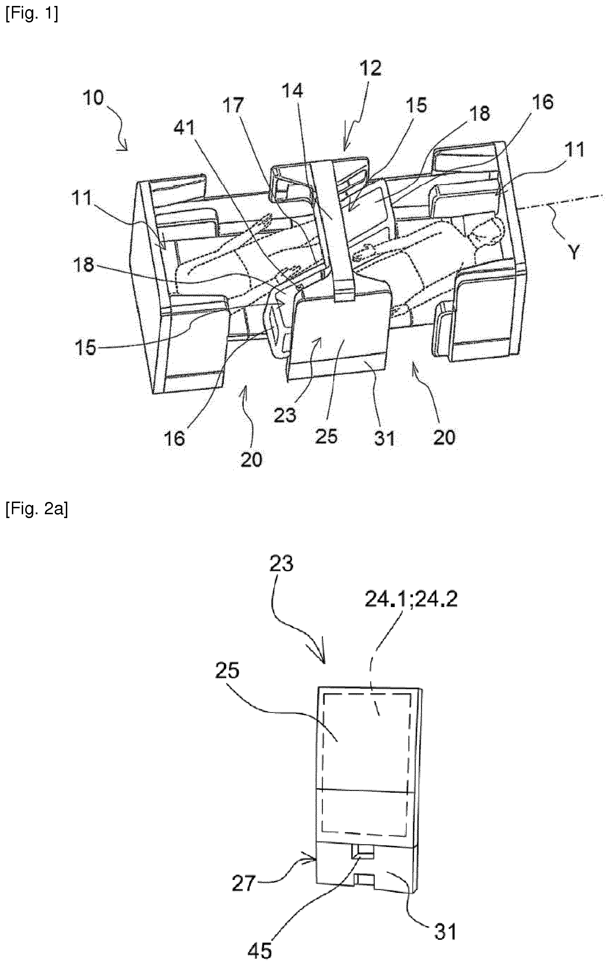

La figure 1 montre une unité de sièges 10 comprenant deux sièges 11, dans lesquels les sièges 11 sont disposés en regard l'un de l'autre. Avantageusement, un siège 11 est apte à passer d'une position "assise", correspondant à la position utilisée notamment lors des phases d'arrêt, de décollage, et d'atterrissage de l'avion, et une position "couchette", dans laquelle le siège 11 définit un plan de couchage sensiblement horizontal pour le passager. En particulier, la position "assise" et la position "couchette" constituent des configurations du siège 11 dans deux positions extrêmes. Selon des variantes de réalisation, le siège 11 pourra également prendre des positions intermédiaire, dites positions relax, entre ces deux positions extrêmes.

Chaque siège 11 peut être disposé de telle sorte qu'il soit sensiblement aligné latéralement avec l'autre siège 11 par rapport à un axe longitudinal Y de l'unité de sièges 10.

Une console centrale 12 positionnée entre les sièges 11 comporte une paroi de séparation transversale 14. La paroi de séparation 14 comporte avantageusement un emplacement pour le montage d'écrans, de dispositifs électroniques, de compartiments de rangement.

En outre, la console centrale 12 comporte deux zones de pieds 15 ouvertes suivant deux directions opposées l'une par rapport à l'autre. Chaque zone de pieds est associée respectivement à un siège 11 correspondant en regard duquel se situe l'ouverture de la zone de pieds 15.

Une zone de pieds 15 se situe dans le prolongement du siège 11 correspondant lorsque ce dernier se trouve en position allongée. Les zones de pieds 15 sont superposées au moins partiellement suivant l'axe longitudinal Y.

Les zones de pieds 15 sont délimitées chacune par un fond 16, les fonds 16 étant reliés entre eux par une paroi commune 17. La paroi commune 17 est avantageusement inclinée par rapport à l'axe longitudinal Y.

En outre, les zones de pieds 15 présentent également chacune une paroi supérieure plane 18 sur laquelle le passager du siège 11 opposé pourra notamment poser des objets. La paroi supérieure 18 pourra ainsi servir de table, de surface de travail, de table de repas, de table de cocktail ou de toute autre surface utilisable pour un passager assis dans le siège 11 opposé (c'est-à-dire le siège 11 qui n'a pas accès à l'ouverture de la zone de pieds 15). Autrement dit, une partie de la zone de pieds 15 s'étend dans l'espace occupé par un passager assis dans le siège 11 opposé.

Afin d'obturer le passage 20 de chaque siège 11 vers un couloir de circulation de l'avion, l'unité de sièges 10 comporte un module double portes 23 disposé suivant un côté de la console centrale 12.

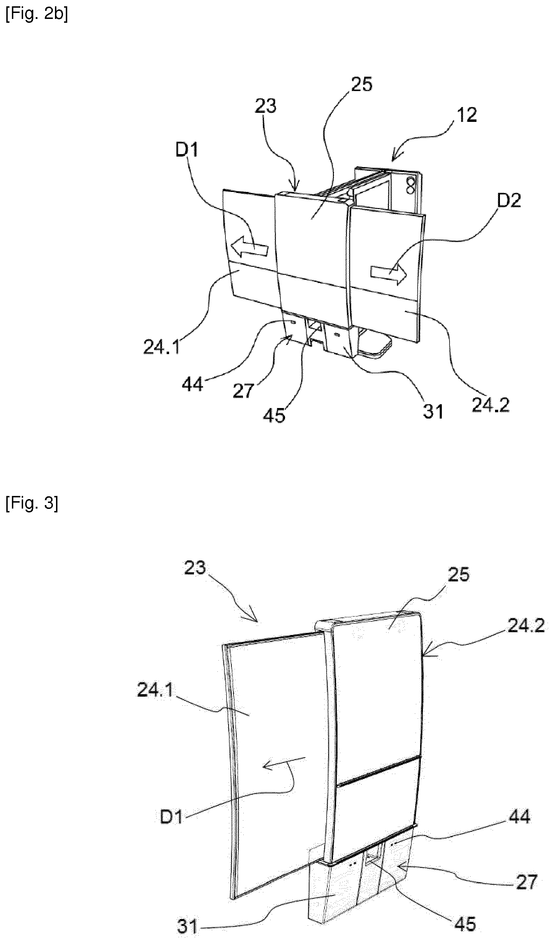

Ce module 23 comporte une première porte 24.1 et une deuxième porte 24.2. Chaque porte 24.1, 24.2 est mobile en translation entre une position stockée dans laquelle la porte 24.1, 24.2 est disposée à l'intérieur d'un boîtier 25, tel que cela est montré sur la figure 2a, et une position déployée dans laquelle la porte 24.1, 24.2 obture un passage 20 correspondant, tel que cela est montré sur la figure 2b.

La première porte 24.1 et la deuxième porte 24.2 sont superposées l'une sur l'autre, notamment à l'intérieur du boîtier 25, lorsque les portes 24.1 et 24.2 se trouvent simultanément en position stockée. Avantageusement, les deux portes 24.1, 24.2 se superposent suivant la majorité de leurs surfaces en position stockée, voire sur la totalité de leurs surfaces. Par "la majorité de leurs surfaces", on entend une superposition des portes 24.1, 24.2 suivant au moins 50% de leurs surfaces, de préférence suivant au moins 80% de leurs surfaces. En outre, dans la zone où les portes 24.1, 24.2 sont superposées l'une sur l'autre, une droite perpendiculaire à une surface d'une des portes 24.1, 24.2 coupe l'autre porte 24.1, 24.2.

Le passage de la position stockée à la position déployée de la première porte 24.1 est effectué suivant une première direction D1 opposée à une deuxième direction D2 suivant laquelle se déplace la deuxième porte 24.2 pour passer de la position stockée à une position déployée. Les mouvements des portes 24.1, 24.2 sont indépendants l'un de l'autre.

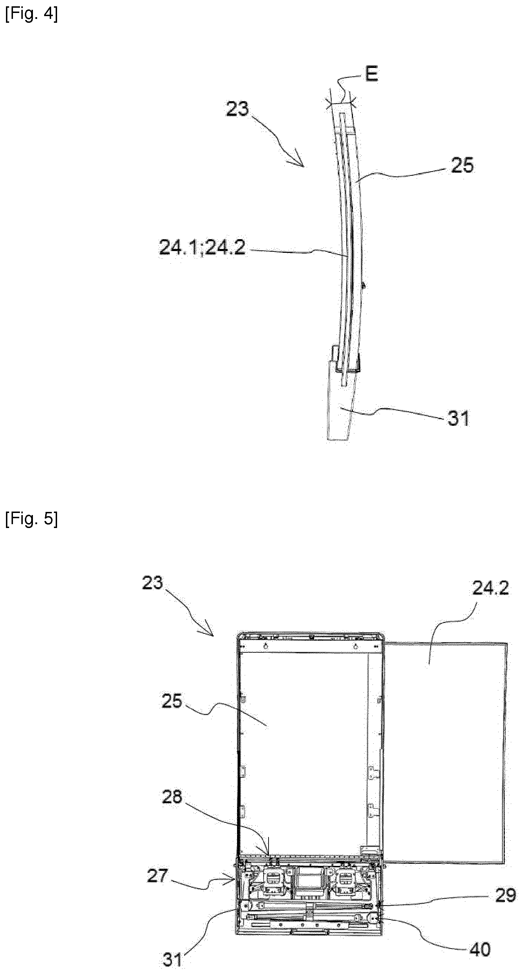

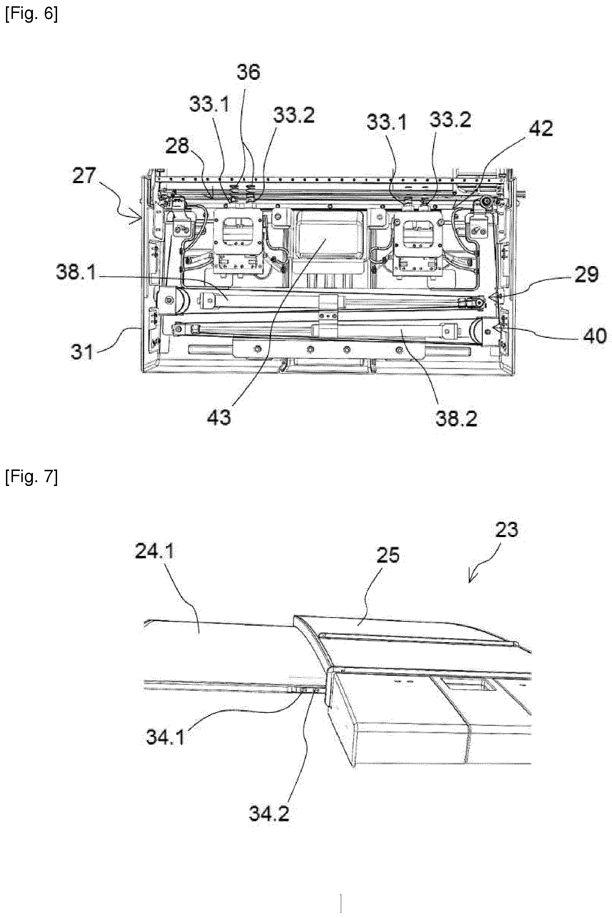

En outre, comme on peut le voir sur les figures 5 et 6, le module de porte 24.1, 24.2 comprend un système de commande 27 comportant un dispositif 28 de verrouillage et de déverrouillage de la première porte 24.1 et/ou de la deuxième porte 24.2, ainsi qu'un dispositif de contrôle 29 de déplacement de la première porte 24.1, 24.2 et/ou de la deuxième porte 24.1, 24.2 d'une position à une autre.

Le carter 31 contenant le système de commande 27 est distinct du boîtier 25 contenant les portes 24.1 et 24.2, c'est-à-dire que le carter 31 contient uniquement l'ensemble des composants du système de commande 27, en sorte que le boîtier 25 ne contient pas de composant de ce système de commande 27. Cela permet de réaliser un module 23 compact qui présente au niveau du boîtier 25 une épaisseur E comprise entre 5 et 10cm et valant environ 7.5cm, tel que montré sur la figure 4. Par "environ", on entend une variation de plus ou moins 10% autour de cette valeur.

Dans l'exemple représenté, le carter 31 du système de commande 27 est disposé en partie basse du module 23. Le carter 31 pourrait en variante être disposé en partie haute du module 23.

Le dispositif 28 de verrouillage et de déverrouillage comprend, pour chaque porte 24.1, 24.2, au moins un actionneur électromagnétique 33.1, 33.2 visible sur la figure 6 destiné à coopérer avec un logement de verrouillage 34.1, 34.2 correspondant ménagé dans la porte 24.1, 24.2 et visible en figure 7. Le logement de verrouillage 34.1, 34.2 est réalisé dans une épaisseur d'une tranche inférieure de la porte.

L'actionneur 33.1, 33.2 est mobile entre une position inactive dans laquelle l'actionneur 33.1, 33.2 est engagé dans le logement de verrouillage 34.1, 34.2 pour bloquer en translation la porte 24.1, 24.2 par l'action d'un organe élastique de rappel 36 et une position active dans laquelle l'actionneur 33.1, 33.2 est dégagé du logement de verrouillage 34.1, 34.2 correspondant pour autoriser un déplacement de la porte 24.1, 24.2.

Avantageusement, on prévoit, pour chaque porte 24.1, 24.2, un premier actionneur électromagnétique 33.1 destiné à être commandé par un passager et un deuxième actionneur électromagnétique 33.2 destiné à être commandé par un membre de personnel de bord. Les logements de verrouillage 34.1, 34.2 associés respectivement au premier actionneur 33.1 et au deuxième actionneur 33.2 d'une porte sont visibles sur la figure 7. Les actionneurs 33.1, 33.2 et les logements de verrouillage 34.1, 34.2 sont disposés pour assurer un blocage de la porte 24.1, 24.2 correspondante en position stockée.

Pour des raisons sécuritaires, un actionneur électromagnétique 33.1, 33.2 est du type normalement en position inactive, c'est-à-dire qu'il se trouve en position inactive lorsqu'il n'est pas parcouru par un courant. Lorsque l'actionneur 33.1, 33.2 est parcouru par un courant, il se déplace vers sa position active. Un organe élastique de rappel 36, tel qu'un ressort, facilite le retour et le maintien de l'actionneur 33.1, 33.2 de la position active vers la position inactive.

Afin de permettre un verrouillage simultané d'une porte par les deux actionneurs 33.1, 33.2, les logements de verrouillage 34.1, 34.2 comportent des géométries différentes, évitant à l'électroaimant coopérant avec le deuxième logement de verrouillage 34.2 de s'engager dans le premier logement de verrouillage 34.1. Les deux logements 34.1, 34.2 et les tiroirs d'actionneurs 33.1, 33.2 correspondants pourront ainsi par exemple présenter des tailles et/ou des formes différentes.

Par ailleurs, comme on peut le voir sur la figure 6, le dispositif de contrôle 29 de déplacement comporte au moins un actionneur de déploiement 38.1, 38.2 et un dispositif 40 de transmission de mouvement de l'actionneur 38.1, 38.2 vers une porte 24.1, 24.2 correspondante.

Avantageusement, l'actionneur de déploiement 38.1 ; 38.2 est un vérin à gaz et le dispositif 40 de transmission de mouvement est un dispositif à courroie et à poulie. En variante, l'actionneur de déploiement 38.1, 38.2 prend la forme d'un moteur électrique ou d'un vérin hydraulique. En variante, le dispositif 40 de transmission de mouvement est à engrenages.

Le déplacement d'une porte 24.1, 24.2 pourra être commandé par un bouton d'actionnement 41 correspondant disposé à l'intérieur du module de siège 11.

Des capteurs 42 de position et/ou d'effort notamment sont prévus pour transmettre des informations permettant à une unité de contrôle 43 de gérer le déplacement des portes 24.1, 24.2 en fonction d'une demande d'actionnement ou de blocage de la porte effectuée par le passager ou le membre du personnel de bord.

Le système de commande 27 pourra également comporter au moins un indicateur visuel 44 d'état du système visibles en figure 3. L'indicateur visuel 44 pourra par exemple être de type lumineux ou mécanique en étant muni d'une fenêtre et de zones de couleur par exemple, des zones verte et rouge prévues sur la porte.

Le carter 31 du système de commande 27 pourra intégrer un marchepied 45 pour permettre aux stewards ou aux hôtesses d'accéder aisément à la soute à bagages.

Par ailleurs, les unités de sièges 10 permettent aux passagers d'évacuer le siège, en assurant un dégagement des voies de circulation ménagées dans l'appareil.

L'invention pourra également être mise en œuvre avec des sièges installés dans d'autres moyens de transport, comme par exemple des sièges de bus, de trains, ou de bateaux.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

Bien évidemment, l'invention n'est pas limitée aux modes de réalisation décrits précédemment et fournis uniquement à titre d'exemple. Elle englobe diverses modifications que pourra envisager l'homme du métier dans le cadre de la présente invention et notamment toutes combinaisons des différents modes de fonctionnement décrits précédemment, pouvant être pris séparément ou en association, dans la portée des revendications annexées.

## Revendications

1. Module double portes (23) pour sièges d'avion, comportant:
- une première porte (24.1) mobile en translation entre une position stockée et une position déployée,
- une deuxième porte (24.2) mobile en translation entre une position stockée et une position déployée,
- la première porte (24.1) et la deuxième porte (24.2) étant superposées l'une sur l'autre lorsque la première porte (24.1) et la deuxième porte (24.2) se trouvent en position stockée, et
- un système de commande (27) comportant un dispositif (28) de verrouillage et de déverrouillage de la première porte (24.1) et/ou de la deuxième porte (24.2),
**caractérisé en ce que**
- le dispositif (28) de verrouillage et de déverrouillage comporte, pour chaque porte (24.1, 24.2), au moins un actionneur électromagnétique (33.1, 33.2) mobile entre une position inactive dans laquelle l'actionneur électromagnétique (33.1, 33.2) est engagé dans un logement de verrouillage (34.1, 34.2) ménagé dans la porte (24.1, 24.2) pour bloquer en translation ladite porte (24.1, 24.2) en position stockée et une position active dans laquelle l'actionneur électromagnétique (33.1, 33.2) est dégagé du logement de verrouillage (34.1, 34.2) pour autoriser un déplacement de la porte (24.1, 24.2),
- le logement de verrouillage (34.1, 34.2) étant réalisé dans une épaisseur d'une tranche inférieure d'une porte (24.1, 24.2) correspondante.

2. Module double portes selon la revendication 1, **caractérisé en ce qu'**il comporte en outre un dispositif de contrôle (29) de déplacement de la première porte (24.1) et/ou de la deuxième porte (24.2) d'une position à une autre.

3. Module double portes selon la revendication 2, **caractérisé en ce qu'**un carter (31) contenant le système de commande (27) est distinct d'un boîtier (25) contenant la première porte (24.1) et la deuxième porte (24.2).

4. Module double portes selon la revendication 3, **caractérisé en ce que** le carter (31) du système de commande (27) est disposé en partie basse du module double portes (23).

5. Module double portes selon la revendication 3 ou 4, **caractérisé en ce que** le boîtier (25) contenant la première porte (24.1) et la deuxième porte (24.2) présente une épaisseur (E) comprise entre 5 et 10cm et valant environ 7.5cm.

6. Module double portes selon l'une quelconque des revendications 1 à 5, **caractérisé en ce que** l'actionneur électromagnétique (33.1, 33.2) est du type normalement en position inactive pour permettre un verrouillage de la porte en position stockée lorsque l'actionneur électromagnétique n'est pas alimenté.

7. Module double portes selon l'une quelconque des revendications 1 à 6, **caractérisé en ce qu'**il comporte un organe élastique de rappel (36) de l'actionneur électromagnétique (33.1, 33.2) en position inactive.

8. Module double portes selon l'une quelconque des revendications 1 à 7, **caractérisé en ce que** le dispositif (28) de verrouillage et de déverrouillage comporte, pour chaque porte (24.1, 24.2), un premier actionneur électromagnétique (33.1) destiné à être commandé par un passager et un deuxième actionneur électromagnétique (33.2) destiné à être commandé par un membre du personnel de bord.

9. Module double portes selon la revendication 8, **caractérisé en ce qu'**un premier logement de verrouillage (34.1) et un deuxième logement de verrouillage (34.2) associés respectivement au premier actionneur électromagnétique (33.1) et au deuxième actionneur électromagnétique (33.2) présentent des géométries différentes.

10. Module double portes selon l'une quelconque des revendications 2 à 5, **caractérisé en ce qu'**il comporte un bouton d'actionnement (41) d'un déplacement d'une porte (24.1, 24.2) correspondante.

11. Module double portes selon l'une quelconque des revendications 2 à 5, **caractérisé en ce que** le dispositif de contrôle de déplacement (29) comporte au moins un actionneur de déploiement (38.1, 38.2) et un dispositif de transmission de mouvement (40) de l'actionneur de déploiement vers une porte (24.1, 24.2) correspondante.

12. Module double portes selon la revendication 11, **caractérisé en ce que** l'actionneur de déploiement (38.1, 38.2) est un vérin à gaz.

13. Module double portes selon la revendication 11 ou 12, **caractérisé en ce que** le dispositif de transmission de mouvement (40) est un dispositif à courroie et à poulie.

14. Module double portes selon l'une quelconque des revendications 1 à 13, **caractérisé en ce que** le système de commande (27) comporte des indicateurs visuels (44) d'état du système.

15. Module double portes selon l'une quelconque des revendications 1 à 14, **caractérisé en ce qu'**un carter (31) du système de commande (27) intègre un marchepied (45).

16. Unité de sièges (10) **caractérisée en ce qu'**elle comporte un module double portes (23) tel que défini selon l'une quelconque des revendications précédentes.

17. Unité de sièges selon la revendication 16, **caractérisée en ce qu'**elle comporte deux sièges (11) disposés en regard l'un de l'autre, chaque siège (11) étant disposé de telle sorte qu'il soit sensiblement aligné latéralement avec l'autre siège (11), et une console centrale (12) positionnée entre les sièges (11), ledit module double portes (23) étant disposé suivant un côté de la console centrale (12).

## Patentansprüche

1. Doppeltürmodul (23) für Flugzeugsitze, umfassend:
- eine erste Tür (24.1), die zwischen einer verstauten Position und einer ausgefahrenen Position translatorisch bewegbar ist,
- eine zweite Tür (24.2), die zwischen einer verstauten Position und einer ausgefahrenen Position translatorisch bewegbar ist,
- wobei die erste Tür (24.1) und die zweite Tür (24.2) übereinander angeordnet sind, wenn sich die erste Tür (24.1) und die zweite Tür (24.2) in der verstauten Position befinden, und
- wobei ein Steuerungssystem (27) eine Verriegelungs- und Entriegelungsvorrichtung (28) für die erste Tür (24.1) und/oder die zweite Tür (24.2) umfasst,
**dadurch gekennzeichnet, dass**
- die Verriegelungs- und Entriegelungsvorrichtung (28) für jede Tür (24.1, 24.2) mindestens einen elektromagnetischen Aktuator (33.1, 33.2) umfasst, der zwischen einer inaktiven Position, in der der elektromagnetische Aktuator (33.1, 33.2) in eine Verriegelungsaufnahme (34.1, 34.2) in der Tür (24.1, 24.2) eingreift ist, um die Tür (24.1, 24.2) in der verstauten Position translatorisch zu blockieren, und einer aktiven Position, in der der elektromagnetische Aktuator (33.1, 33.2) aus der Verriegelungsaufnahme (34.1, 34.2) gelöst ist, um die Bewegung der Tür (24.1, 24.2) zu ermöglichen, beweglich ist,
- wobei die Verriegelungsaufnahme (34.1, 34.2) in der Dicke einer Unterkante einer entsprechenden Tür (24.1, 24.2) vorgesehen ist.

2. Doppeltürmodul nach Anspruch 1, **dadurch gekennzeichnet, dass** es ferner eine Steuervorrichtung (29) für die Bewegung der ersten Tür (24.1) und/oder der zweiten Tür (24.2) von einer Position in eine andere umfasst.

3. Doppeltürmodul nach Anspruch 2, **dadurch gekennzeichnet, dass** ein Kasten (31), das das Steuersystem (27) enthält, von einem Gehäuse (25) getrennt ist, das die erste Tür (24.1) und die zweite Tür (24.2) enthält.

4. Doppeltürmodul nach Anspruch 3, **dadurch gekennzeichnet, dass** der Kasten (31) des Steuersystems (27) im unteren Teil des Doppeltürmoduls (23) angeordnet ist.

5. Doppeltürmodul nach Anspruch 3 oder 4, **dadurch gekennzeichnet, dass** das die erste Tür (24.1) und die zweite Tür (24.2) enthaltende Gehäuse (25) eine Dicke (E) zwischen 5 und 10cm und ungefähr gleich 7,5cm aufweist.

6. Doppeltürmodul nach einem der Ansprüche 1 bis 5, **dadurch gekennzeichnet, dass** der elektromagnetische Aktuator (33.1, 33.2) von dem Typ ist, der sich normalerweise in der inaktiven Position befindet, um die Tür in der verstauten Position zu verriegeln, wenn der elektromagnetische Aktuator nicht bestromt ist.

7. Doppeltürmodul nach einem der Ansprüche 1 bis 6, **dadurch gekennzeichnet, dass** es ein elastisches Rückstellelement (36) des elektromagnetischen Aktuators (33.1, 33.2) in der inaktiven Position umfasst.

8. Doppeltürmodul nach einem der Ansprüche 1 bis 7, **dadurch gekennzeichnet, dass** die Verriegelungs- und Entriegelungsvorrichtung (28) für jede Tür (24.1, 24.2) einen ersten, durch einen Passagier betätigbaren elektromagnetischen Aktuator (33.1) und einen zweiten, durch ein Mitglied des Bordpersonals betätigbaren elektromagnetischen Aktuator (33.2) umfasst.

9. Doppeltürmodul nach Anspruch 8, **dadurch gekennzeichnet, dass** ein erstes Verriegelungsaufnahme (34.1) und ein zweites Verriegelungsaufnahme (34.2), die jeweils dem ersten elektromagnetischen Aktuator (33.1) und dem zweiten elektromagnetischen Aktuator (33.2) zugeordnet sind, unterschiedliche Geometrien aufweisen.

10. Doppeltürmodul nach einem der Ansprüche 2 bis 5, **dadurch gekennzeichnet, dass** es einen Betätigungsknopf (41) zum Bewegen einer entsprechenden Tür (24.1, 24.2) umfasst.

11. Doppeltürmodul nach einem der Ansprüche 2 bis 5, **dadurch gekennzeichnet, dass** die Bewegungssteuervorrichtung (29) mindestens einen Ausfahraktuator (38.1, 38.2) und eine Bewegungsübertragungsvorrichtung (40) für den Ausfahraktuator zu einer entsprechenden Tür (24.1, 24.2) umfasst.

12. Doppeltürmodul nach Anspruch 11, **dadurch gekennzeichnet, dass** der Ausfahraktuator (38.1, 38.2) eine Gaszylinder ist.

13. Doppeltürmodul nach Anspruch 11 oder 12, **dadurch gekennzeichnet, dass** die Bewegungsübertragungsvorrichtung (40) eine Riemen- und Scheibenvorrichtung ist.

14. Doppeltürmodul nach einem der Ansprüche 1 bis 13, **dadurch gekennzeichnet, dass** das Steuersystem (27) optische Anzeigen (44) für den Status des Systems umfasst.

15. Doppeltürmodul nach einem der Ansprüche 1 bis 14, **dadurch gekennzeichnet, dass** ein Kasten (31) des Steuerungssystems (27) einen Tritt (45) aufweist.

16. Sitzeinheit (10), **dadurch gekennzeichnet, dass** sie ein Doppeltürmodul (23) gemäß einem der vorhergehenden Ansprüche umfasst.

17. Sitzeinheit nach Anspruch 16, **dadurch gekennzeichnet, dass** sie zwei einander gegenüberliegende Sitze (11), wobei jeder Sitz (11) so angeordnet ist, dass er im Wesentlichen seitlich mit dem anderen Sitz (11) ausgerichtet ist, und eine zwischen den Sitzen (11) positionierte Mittelkonsole (12), wobei das Doppeltürmodul (23) entlang einer Seite der Mittelkonsole (12) angeordnet ist, umfasst.

## Claims

1. A double door module (23) for aircraft seats, comprising:
- a first door (24.1) movable in translation between a stored position and a deployed position,
- a second door (24.2) movable in translation between a stored position and a deployed position,
- the first door (24.1) and the second door (24.2) overlapping with each other when the first door (24.1) and the second door (24.2) are in the stored position, and
- a control system (27) comprising a locking and unlocking device (28) for the first door (24.1) and/or the second door (24.2),
**characterized in that**
- the locking and unlocking device (28) comprises for each door (24.1, 24.2) at least one electromagnetic actuator (33.1, 33.2) movable between an inactive position in which the electromagnetic actuator (33.1, 33.2) is engaged in a locking housing (34.1, 34.2) provided in the door (24.1, 24.2) in order to block said door (24.1, 24.2) in translation in the stored position and an active position in which the electromagnetic actuator (33.1, 33.2) is released from the locking housing (34.1, 34.2) in order to allow movement of the door (24.1, 24.2),
- the locking housing (34.1, 34.2) being provided in a thickness of a lower edge of a corresponding door (24.1, 24.2).

2. The double door module according to claim 1, **characterized in that** it further comprises a control device (29) for moving the first door (24.1) and/or the second door (24.2) from one position to another.

3. The double door module according to claim 2, **characterized in that** a casing (31) containing the control system (27) is separate from a housing (25) containing the first door (24.1) and the second door (24.2).

4. The double door module according to claim 3, **characterized in that** the casing (31) of the control system (27) is arranged in the lower part of the double door module (23).

5. The double door module according to claim 3 or 4, **characterized in that** the housing (25) containing the first door (24.1) and the second door (24.2) has a thickness (E) between 5 and 10cm and approximately equal to 7.5cm.

6. The double door module according to any one of the claims 1 to 5, **characterized in that** the electromagnetic actuator (33.1, 33.2) is of the type normally in the inactive position in order to lock the door in the stored position when the electromagnetic actuator is not powered.

7. The double door module according to any one of the claims 1 to 6, **characterized in that** it comprises an elastic return member (36) of the electromagnetic actuator (33.1, 33.2) in the inactive position.

8. The double door module according to any one of the claims 1 to 7, **characterized in that** the locking and unlocking device (28) comprises for each door (24.1, 24.2) a first electromagnetic actuator (33.1), controllable by a passenger, and a second electromagnetic actuator (33.2), controllable by a member of the on-board staff.

9. The double door module according to claim 8, **characterized in that** a first locking housing (34.1) and a second locking housing (34.2) associated respectively with the first electromagnetic actuator (33.1) and the second electromagnetic actuator (33.2) have different geometries.

10. The double door module according to any one of the claims 2 to 5, **characterized in that** it comprises an actuation button (41) for moving a corresponding door (24.1, 24.2).

11. The double door module according to any one of the claims 2 to 5, **characterized in that** the movement control device (29) comprises at least one deployment actuator (38.1, 38.2) and a movement transmission device (40) for the deployment actuator to a corresponding door (24.1, 24.2).

12. The double door module according to claim 11, **characterized in that** the deployment actuator (38.1, 38.2) is a gas spring.

13. The double door module according to claim 11 or 12, **characterized in that** the movement transmission device (40) is a belt and pulley device.

14. The double door module according to any one of the claims 1 to 13, **characterized in that** the control system (27) comprises visual indicators (44) for the status of the system.

15. The double door module according to any one of the claims 1 to 14, **characterized in that** a casing (31) of the control system (27) incorporates a step pad (45).

16. A seat unit (10), **characterized in that** it comprises a double door module (23) as defined according to any one of the preceding claims.

17. The seat unit according to claim 16, **characterized in that** it comprises two seats (11) opposite one another, each seat (11) being arranged so that it is substantially laterally aligned with the other seat (11), and a central console (12) positioned between the seats (11), said double door module (23) being arranged along one side of the central console (12).
